# EUROPEAN PATENT SPECIFICATION

(11) **EP 4 089 571 B1**
(45) Date of publication and mention of the grant of the patent: **21.08.2024**
(21) Application number: 22161792.1
(22) Date of filing: 14.03.2022
(51) Int. Cl.: G06K 7/10

(54) **HIGH-SPEED TUNNEL FOR THE READING AND MASS ENCODING OF RFID LABELS CONTAINED IN A PACKAGE**
HOCHGESCHWINDIGKEITSTUNNEL ZUM LESEN UND MASSENCODIEREN VON IN EINER VERPACKUNG ENTHALTENEN RFID-ETIKETTEN
TUNNEL À HAUTE VITESSE POUR LA LECTURE ET LE CODAGE DE MASSE D'ÉTIQUETTES RFID CONTENUES DANS UN EMBALLAGE

(30) Priority: 14.05.2021 ES 202130987 U
(43) Date of publication of application: 16.11.2022
(73) Proprietor: Rielec Automatizacion Industrial, S.L., 46870 Ontinyent (Valencia) (ES)
(72) Inventor: RIUS PASCUAL, Luis, 46870 ONTINYENT (Valencia) (ES)
(74) Representative: Ungria López, Javier

(56) References cited:
- EP-A2- 1 873 682
- US-A1- 2012 019 364
- US-B1- 9 760 826

## Description

### TECHNICAL FIELD

The present invention relates to a high-speed tunnel that enables the simultaneous reading and mass encoding of a large volume of RFID labels in a short time in a highly advantageous manner. Specifically, the tunnel of the invention is used for the identification and mass encoding of RFID labels contained in the package or product moving automatically through the inside of the developed tunnel.

The object of the invention is to obtain a tunnel which, while offering reduced dimensions, allows the quick identification and encoding of the labels of elements present on a package by means of RFID technology, all this being based on a simple, and accordingly cost-effective, structuring with simple and low-cost maintenance.

### BACKGROUND OF THE INVENTION

RFID (Radio Frequency Identification) technology allows identifying, storing, and transmitting remote data stored in labels using to that end radiofrequency. For this reason, RFID technology is widely used in parcel and logistics services for the swift monitoring and control of items sent based on received orders.

Tunnels which identify measurements of RFID labels when they are located on the same container or package, allowing the simultaneous reading of a plurality of RFID labels, are known in the current state of the art.

It is known in the prior art systems like the system described in the European patent application with publication number EP 1873682, titled "system and method for obtaining information from objects provided with bar codes and RFID tags". This document discloses a system to read RFID tags with open shielding elements to avoid signal collisions of low-power signals from RFID antennas.

Another document of the prior art is the US patent application 2012/0019364. This document discloses an RFID reading apparatus having a reading portal for reading out at least one RFID transponder moved on the conveyor, having a receiver and a plurality of antennas connected to the receiver for receiving RFID signals from the RFID transponder.

Another document of the prior art is the US patent with publication number US9760826B1, titled "Shielded portal for multi-reading RFID tags affixed to articles". This document discloses an RFID multi-read tunnel containing a shielding enclosure that confines and isolates RFID tagged articles grouped for reading.

The main drawback of the known tunnels lies in the time invested in reading and encoding a significant amount of labels. Additionally, another drawback of the known equipment lies in the large dimensions of this type of equipment, which hinders its installation, taking up a large expanse of spaces in companies with the corresponding failure to utilize a useful asset. Current equipment does not have insulation systems which prevent the undesired reading of items with labels which, while being located close to the tunnel, are not the object of measurement. In that sense, it is verified that the present applicant is unaware of any equipment which allows processing large volumes of labels simultaneously and in very short time periods.

In order to avoid these problems, the applicant itself is the proprietor of utility model ES1249189U which describes a tunnel with reduced dimensions which offers an effective solution to perform a very quick and swift measurement of a large plurality of RFID labels contained in the packages to be monitored, and preventing the undesired reading of other packages or products which are not the object of measurement.

More specifically, said device comprises conveyance means along which the package is moved, respective guillotine entry and exit doors for actuating the quick opening and closing thereof, a high-power antenna for the measurement of RFID labels, and a photocell, wherein the photocell identifies the presence of the package which is moved along the tunnel, actuating the closing of the guillotine entry door and the guillotine exit door by means of a motor associated with a transmission shaft, pulleys, and belts; and activating the antenna when the guillotine entry door and the guillotine exit door of the tunnel are closed.

Although this solution solves the described problems, actually it still has a structure which, while being simpler than known prior arts, remains complex and requires costly maintenance, and the guillotine doors present the drawback of being able to generate incorrectly coordinated movements, such that the situation in which measurement is performed with a guillotine door open may arise. If a reading is performed with one of the doors open, radiofrequency waves leak out through said door and the reading may not be valid because many labels may remain unread. Even when the door is closed properly, waves may be lost during the time of opening and/or closing said door, and this may affect the quality of the reading.

### DESCRIPTION OF THE INVENTION

The invention is set out in claim 1.

The proposed tunnel solves in a fully satisfactory manner the problems set forth above based on a simple solution that is, however, highly efficient.

All the bulk products arranged, for example, in a carton, reach the inside of the tunnel, and all the RFID labels of said products are read all at once in the tunnel. To that end, when the products are arranged on the inside of the tunnel, a box, housed on the inside of the tunnel and with the possibility of vertically moving along said inside of the tunnel, moves down until coming into contact with a lower tray, such that a Faraday cage is formed between both elements. Preferably, seals configured for performing RFID shielding are arranged on the lower edges of the box, thereby contributing to the formation of the Faraday cage and preventing possible wave leakages through possible free spaces between the box and the lower tray.

To that end, and based on the structuring of the tunnel described in utility model ES1249189U, it has been envisaged that the guillotine entry door and the guillotine exit door are complemented with side walls integrating a vertically movable box, which is moved upward (open position) and downward (lower/closed position or reading mode).

Therefore, in the downward movement of the box, a leak-tight space which allows performing the reading and mass encoding of RFID labels with greater assurance is generated. Said leak-tight space is demarcated by the box and a lower tray on which the box rests in its closed position, i.e., in its lower position, to generate the leak-tight space. In a preferred embodiment of the invention, the tunnel does not comprise guillotine entry and exit doors and the Faraday cage required for the reading of RFID labels is generated between the box and the lower tray.

In this manner, both entry into and exit from the tunnel are controlled only with vertical movement means for the box, thereby requiring fewer mobile elements to be controlled, simplifying the structure and reducing maintenance, in addition to preventing possible conflicting situations like those which may occur in utility model ES1249189U, in the case of a poor synchronisation in the opening and closing of the entry and exit doors.

The vertical movement means for the box are means for actuating the box configured for moving it vertically between an upper position and a lower position in which it is in contact with the lower tray.

Preferably, the box is perforated for the purpose of reducing the weight thereof. This feature is important because, as a result of an increased label reading speed, the stress suffered by the mechanism performing the linear movement of lifting and lowering the box is greater, so the stress to which said mechanism is subjected must be reduced. Furthermore, optionally, the installation of weighing cells for determining the weight of the goods introduced in the tunnel has been envisaged. An additional measurement parameter for knowing the weight of the package is thereby added.

RFID label reading speed is significantly increased with the present invention because only the times for the vertical movement of the box and the movements of the packages to be read moving from the outside of the tunnel to the inside thereof and back to the outside once read are to be considered. Therefore, the box is moved at a very high speed, and therefore impacts against the lower tray at a very high speed. To enable ensuring said speed and at the same time reduce the weight of the box so as to reduce the stress suffered by the lower tray when it receives impact, the perforations described have been provided in the upper base and/or the side walls of the box. The seals also contribute to reducing the tension caused by the box impacting the lower base.

Optionally, the invention has a simplified covering structure which is formed by visors installed at the inlet and outlet of the tunnel.

Original covering structures, referred to as "pre-tunnels" in utility model number ES1249189U, took up more space and required wheels, constituting a large volume accessory.

The advantage of replacing the pre-tunnels with visors is that visors take up less volume and are directly anchored to the machine, therefore simplifying the structuring thereof.

It has also been envisaged that the electrical switchboard goes from being integrated in the tunnel to being an independent element, allowing the tunnel itself to take up less space and to offer greater versatility for its installation. The electrical switchboard is wired to the tunnel to enable communication between them.

Lastly, it should be pointed out that, also optionally, the side door envisaged in the structure of the tunnel for maintenance is now formed by two hinged leaves for better accessibility and greater practicality.

In a preferred embodiment of the invention, the lower tray may comprise bushing connectors for the passage of cables which are housed inside the Faraday cage when the box is in a lower position in contact with the lower tray. These cables can furthermore be surrounded by standard shielding meshes. The cables are connectable to the antennas.

The present invention allows packages to be distributed closer to one another for reading, being housed inside the box, preventing unnecessary spaces between said packages, and thereby optimising the space used by carriers.

### BRIEF DESCRIPTION OF THE DRAWINGS

In order to complement the description that will be made below and with the object of helping to better understand the features of the invention, in accordance with a preferred practical embodiment thereof, said description is accompanied, as an integral part thereof, by a set of drawings where, in an illustrative and non-limiting manner, the following has been represented:
Figure 1 shows a perspective view of the tunnel made according to the object of the present invention.
Figure 2 shows a perspective detail of the box and the mechanism for actuating same found inside the tunnel of Figure 1.
Figure 3 shows a perspective detail of the inner structure of the tunnel on which the box of Figure 2 is vertically movable, i.e., the lower tray and the elements arranged on the inside of the box when it is in its lowest position in contact with said lower tray are shown.
Figure 4 shows a front perspective view of the assembly of Figure 3.
Figure 5 shows a side view of the tunnel with the access doors for maintenance in the open position, where the box and the mechanism for actuating same are thus observed on the inside of the tunnel.
Figure 6 shows a schematic view of the box of the invention in the lower position in contact with the lower tray, where the seals, the bushing connector, and the shielding mesh can be seen.

### PREFERRED EMBODIMENT OF THE INVENTION

In view of the mentioned figures, it can be observed how the high-speed tunnel for the reading and mass encoding of RFID labels contained in a package is formed by at least the following elements:
- conveyance means (1) along which the package is moved,
- a housing (18) with respective opposing inlet and outlet openings,
- one or more high-power antennas (4) for the measurement of RFID labels,
- a photocell (5), and
- a vertically movable box (20) which can move vertically on the assembly formed by the holding structure holding the antennas (4) and the conveyance means (1) and which, in the lowered position thereof, is supported on a lower tray (23).

When the box (20), which in a preferred embodiment is manufactured from perforated aluminium, moves down, it contacts the lower tray (23) to enclose the carton or package in an environment impervious to RFID wave leakage, offering highly focused and efficient electromagnetic shielding in the carton or package. The perforations of the box (20) have just the right measurement to prevent the passage of waves through the openings (thereby preventing the reading of labels not arranged inside the box (20)), while at the same time allowing the passage of airflow.

In another embodiment, the box (20) may be manufactured from other metal materials which ensure electromagnetic insulation (steel, for example). However, in the preferred embodiment, perforated aluminium has been selected because it is lighter in weight, being more suitable for optimising motors which control motor-driven mechanisms in charge of controlling the vertical movement of the box (20).

Therefore, in one embodiment the high-speed tunnel for the reading and mass encoding of RFID labels contained in a package is of the type made up of a housing (18) with respective opposing inlet and outlet openings, inside which there are established conveyance means (1) along which the package is moved, as well as one or more high-power antennas (4) for the measurement of RFID labels, and a photocell (5) for the detection of the entry of packages into the tunnel, these elements being controlled by means of a control unit associated with an electrical switchboard (16). A guillotine entry door and a guillotine exit door are complemented with side walls integrating a box (20) such that there is established under the conveyance means (1) of the tunnel a lower tray (23) on which it is vertically movable the box (20) which, in the downward movement thereof, is susceptible of covering and electromagnetically insulating the assembly formed by the holding structure holding the antenna or antennas (4) and the conveyance means (1), and the box (20) of which, in the lowered position, is supported on the lower tray (23), such that the box (20) can be moved vertically through a pair of linear guides or shafts (21), by means of motor-driven mechanisms (22) associated with control electronics of the electrical switchboard (16).

In the embodiments in which the box (20) comprises perforations, said perforations can be in the upper base and/or in the side walls and allow emptying air from the inside of the box (20), in addition to reducing the weight of the box (20) so as to reduce the stress in the mechanism vertically moving the box (20). By releasing air from the inside of the box (20), the effect of vacuum or additional pressures generated by the linear vertical movement of the box (20) as it moves up and down is prevented.

In a preferred embodiment of the invention, the box (20) comprises lower edges on which there are arranged seals (25) which ensure the hermetic nature of the box (20) and prevent sudden impacts of the box (20) against the lower tray (23) on which it is supported. The seals (25) are configured for ensuring RFID shielding between the box (20) and the lower tray (23) such that a Faraday cage is created between the box (20), the lower tray (23), and the seals (25). This feature allows increasing power up to 50% with respect to conventional tunnels, and therefore the reading of a larger number of RFID labels can be performed. To ensure the hermetic nature of the seals, i.e., to prevent the seals from being able to absorb some waves, said seals are not painted.

The seals (25) are linear elements which, in one embodiment, may have a thickness of 1 cm. Said seals (25) comprise a metal coating which ensures electromagnetic sealing on the inside of the Faraday cage. The seals (25) are made of a material having elastic properties. As a result of the seals (25) having a mechanically elastic behaviour, impacts produced by lowering the box (20) against the lower tray (23) are absorbed with precision and durability.

Preferably, the box (20) is manufactured from aluminium and the upper base and the side walls have a thickness of 2 mm. If the upper base and the side walls are made with increased thickness, i.e., from 3 mm, the box (20) will be very heavy. If they are made with reduced thickness, i.e., 1 mm, they will be too soft and deform during manufacture.

The perforations also preferably have a diameter of 5 mm. This diameter represents a compromise between a small enough size which allows RFID shielding and a large enough size which allows reducing the weight and increasing airflow therethrough. Likewise, the separation between the centres of the perforations is preferably 12 mm.

In a possible embodiment of the invention, the perforations are distributed in a grid and in another possible embodiment of the invention, they are distributed in a staggered manner. This second option provides a more uniform internal tension distribution of the material during manufacture by means of punching. This minimises general deformation of the plate with which the upper base and/or the side walls are formed.

Therefore, the conveyance means (1) are preferably formed by a plurality of rollers which facilitate the conveyance of the packages or products to be read, the conveyance means (1) being automated to facilitate the mentioned movement, where weighing cells (24) may be included. The weighing cells (24) are preferably arranged in the lower part of the rollers.

In one embodiment, the tunnel likewise comprises a first conveyor which is arranged before the inlet of the tunnel and configured for transferring the packages from the outside to the inside of the tunnel. The packages are transferred from the first conveyor to the conveyance means (1) arranged on the inside of the tunnel. Likewise, the tunnel may comprise a second conveyor which is arranged after the outlet of the tunnel, configured for moving the packages to the desired position.

The conveyance means (1) located on the inside of the tunnel preferably comprise central rollers made of plastic material for improving the reading of RFID labels and preventing undesired wave distortions. The rollers must be made of plastic to prevent the waves from rebounding thereon and being incapable of going through the roller area, in the case that the rollers were metal rollers, for example. This would entail a low wave intensity in the area where reading is performed.

In turn, the box (20) can be moved vertically through a pair of linear guides or shafts (21), by means of motor-driven mechanisms (22) associated with control electronics of the electrical switchboard (16).

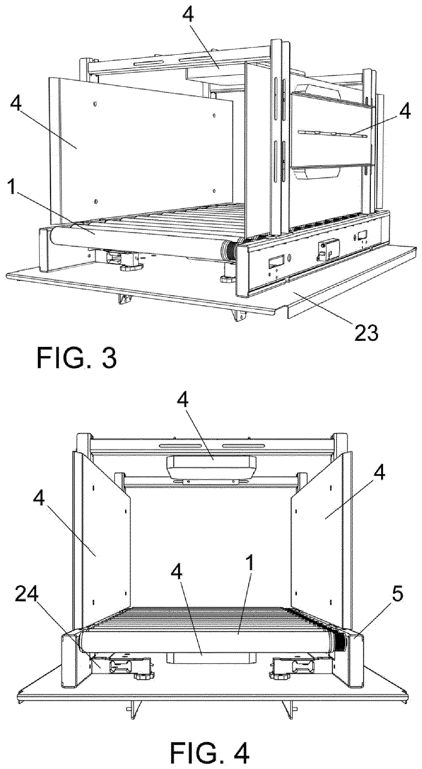

As observed in Figure 4, the lower tray (23) takes the shape of a simple steel plate bent on all sides, supporting the weight of the roller conveyor, weighing cells (24), and antennas (4).

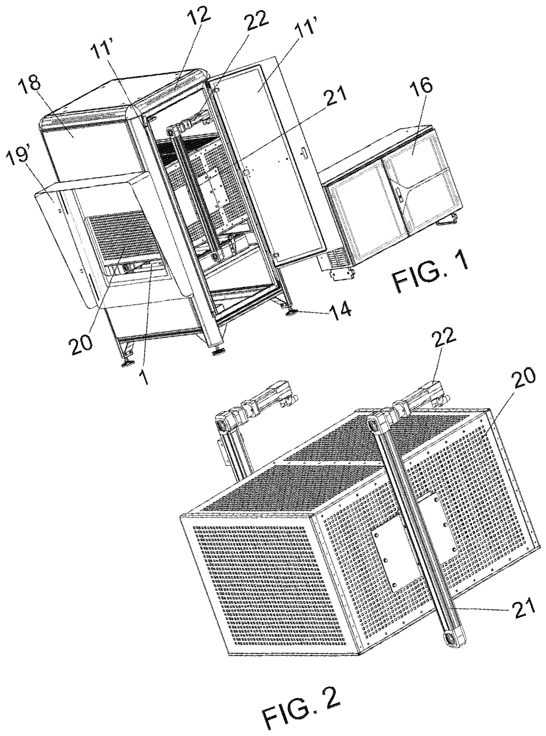

In this manner, when a package is located on the conveyance means (1), the photocell (5) identifies its presence and actuates the lowering of the box (20) through the linear shafts (21) and by means of the motor-driven mechanisms (22). The mentioned elements are clearly observed in Figures 2 to 4.

Specifically, the box (20) in the lowered position allows activating the antenna or antennas (4) for the measurement or reading of the RFID labels present on the inside of the tunnel.

Preferably, as depicted in Figure 4, the tunnel has a plurality of antennas (4), specifically four high-power antennas (4) located in the upper, lateral, and lower parts of the tunnel, to ensure that the emission of the assembly of antennas (4) emits scanning the entire closed enclosure demarcated by the tunnel.

As a matter of fact, the mentioned antennas (4) are in charge of emitting high-power radiofrequency waves, identifying and measuring the plurality of RFID labels contained in the packages arranged on the conveyance means (1).

It should be highlighted that all the elements forming the high-speed tunnel are controlled by means of a control unit associated with an electrical switchboard (16) for the proper operation thereof, in this case being independent, allowing the tunnel itself to take up less space and to offer greater versatility for the installation thereof. The electrical switchboard (16) is wired to the tunnel to enable communication between them.

Moreover, the high-speed tunnel preferably has a plurality of beacons (12) which allow visually displaying the state of the process of the machine. For example, the beacons (12) visually and/or audibly indicate the following moments:
- the operation of the tunnel in which the products or packages are moved automatically by the conveyance means (1),
- shutdown, or
- the moment of the reading thereof in which the antennas (4) are emitting.

Optionally, the establishment of visors (19') directly anchored to the tunnel has been envisaged at the inlet and at the outlet of the tunnel, therefore simplifying the structuring thereof. These visors (19') take the shape of inverted U-shaped plates which serve as a support for fixing additional safety barriers or other elements, preventing operator access to dangerous areas without cutting the safety barriers, not depicted in the figures.

Optionally, the high-speed tunnel has levelling supports (14) in its base to ensure the stability of the tunnel as a whole during the installation thereof.

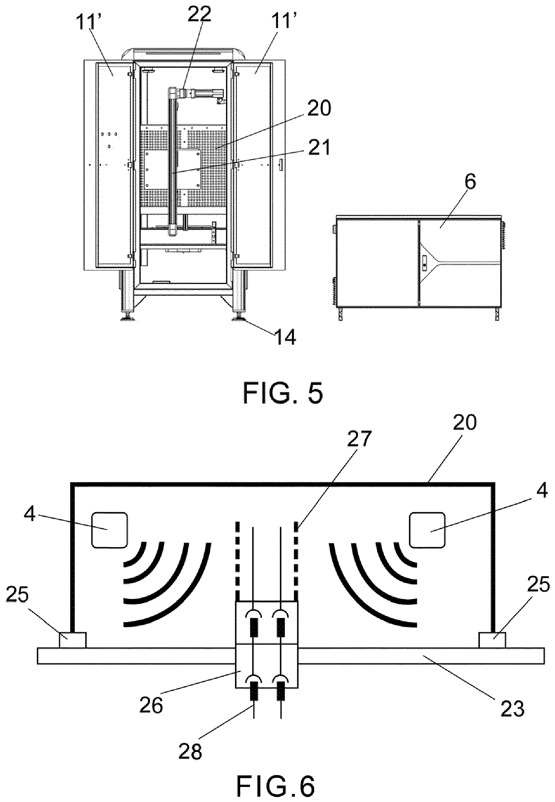

As can be observed in Figure 5, the main housing (18) of the tunnel is susceptible of incorporating a pair of hinged doors or leaves (11') for accessing the inside thereof for maintenance.

Likewise, the tunnel preferably comprises at least one bushing connector (26) in the lower tray (23) through which cables (28) go through said lower tray (23) to be arranged inside the Faraday cage when the box (20) is in the lower position. With the bushing connector (26), losses of reading waves which may leak out through the openings through which cables (28) are passed are prevented. Likewise, the cables are surrounded by a shielding mesh (27) to prevent losses of waves on the inside from being able to be absorbed by said cables (28). In this manner, the cables (28) are shielded, preferably shielded by means of a standard shielding mesh (27).

The present invention increases the amount of labels read, and said labels are furthermore read at a greater speed and without wave leakages that may distort the reading. Improvement in the reading time of RFID labels per package is reduced from 4 seconds to 0.6 seconds.

Therefore, the proposed tunnel is impervious to the reading waves, thereby preventing any leakage which could lead to errors in the reading. Even cables arranged inside the Faraday cage (formed between the box (20) and the lower tray (23)) are shielded in order to prevent any possible undesired wave absorption.

## Claims

1. A high-speed tunnel for the reading and mass encoding of RFID labels contained in a package; the tunnel comprises a housing (18) with respective opposing inlet and outlet openings, inside which there are established conveyance means (1) along which the package is moved, as well as one or more high-power antennas (4) for the measurement of RFID labels, arranged in a holding structure, and a photocell (5) for the detection of the entry of packages into the tunnel, these elements being controlled by means of a control unit associated with an electrical switchboard being part (16) of the tunnel, **characterised in that** the high-speed tunnel further comprises a guillotine entry door and a guillotine exit door complemented with side walls integrating a box (20), and a lower tray (23) arranged under the conveyance means (1) of the tunnel; the box (20) can be vertically moved by means of a pair of linear guides or shafts (21) and by means of motor-driven mechanisms (22) associated with control electronics of the electrical switchboard (16); the box (20) in the lowered position covers and electromagnetically shields an assembly formed by the holding structure of the antenna or antennas (4) and the conveyance means (1) and the package; wherein the box (20) comprises lower edges on which there are arranged seals (25) configured for ensuring RFID shielding between the box (20) and the lower tray (23) such that a Faraday cage is created between the box (20), the lower tray (23) and the seals (25).

2. The high-speed tunnel for the reading and mass encoding of RFID labels contained in a package according to claim 1, wherein the box (20) is made of perforated aluminium.

3. The high-speed tunnel for the reading and mass encoding of RFID labels contained in a package according to claim 1, wherein the conveyance means (1) include weighing cells (24).

4. The high-speed tunnel for the reading and mass encoding of RFID labels contained in a package according to claim 1, wherein at the inlet and at the outlet of the tunnel there are established visors (19') directly anchored to the tunnel, taking the shape of inverted U-shaped plates.

5. The high-speed tunnel for the reading and mass encoding of RFID labels contained in a package according to claim 1, wherein the electrical switchboard (16) constitutes an independent element with respect to the tunnel itself, connected thereto through the corresponding wiring.

6. The high-speed tunnel for the reading and mass encoding of RFID labels contained in a package according to claim 1, wherein the housing (18) includes a side access for maintenance, formed by a pair of hinged leaves (11').

7. The high-speed tunnel for the reading and mass encoding of RFID labels contained in a package according to claim 1, wherein the box (20) comprises side walls and an upper base and is formed by aluminium plates with a thickness of 2 mm.

8. The high-speed tunnel for the reading and mass encoding of RFID labels contained in a package according to any one of the preceding claims, wherein the box (20) comprises side walls and an upper base and the perforations of the side walls and/or of the upper base have a diameter of 5 mm.

9. The high-speed tunnel for the reading and mass encoding of RFID labels contained in a package according to any one of the preceding claims, wherein the box (20) comprises side walls and an upper base and the centres of the perforations of the side walls and/or of the upper base are separated from one another by 12 mm.

10. The high-speed tunnel for the reading and mass encoding of RFID labels contained in a package according to any one of the preceding claims, wherein the lower tray (23) comprises a bushing connector (26) through which cables (28) go through said lower tray (23) to be arranged inside the Faraday cage when the box (20) is in a lower position in contact with said lower tray (23).

11. The high-speed tunnel for the reading and mass encoding of RFID labels contained in a package according to claim 10, wherein the cables (28) are surrounded by a shielding mesh (27).

12. The high-speed tunnel for the reading and mass encoding of RFID labels contained in a package according to any one of the preceding claims, wherein the seals (25) are made of material having elastic properties and comprise a metal coating.

13. The high-speed tunnel for the reading and mass encoding of RFID labels contained in a package according to any one of the preceding claims, wherein the seals (25) are linear elements having a thickness of 1 cm.

## Patentansprüche

1. Hochgeschwindigkeitstunnel zum Lesen und Massencodieren von RFID-Etiketten, die in einer Verpackung enthalten sind, wobei der Tunnel umfasst: ein Gehäuse (18) mit jeweils gegenüberliegenden Einlass- und Auslassöffnungen, in dem eine Fördereinrichtung (1), entlang derer die Verpackung bewegt wird, sowie eine oder mehrere Hochleistungsantennen (4) für die Messung von RFID-Etiketten, die in einer Haltestruktur angeordnet sind, und eine Fotozelle (5) für die Erfassung des Eintritts von Verpackungen in den Tunnel eingerichtet sind, wobei diese Elemente mittels einer Steuereinheit gesteuert werden, die mit einer elektrischen Schalttafel verbunden ist, die Teil (16) des Tunnels ist, **dadurch gekennzeichnet, dass** der Hochgeschwindigkeitstunnel außerdem eine Guillotinen-Eingangstür und eine Guillotinen-Ausgangstür, die durch Seitenwände ergänzt sind, die einen Kasten (20) integrieren, und eine untere Ablage (23) umfasst, die unter der Fördereinrichtung (1) des Tunnels angeordnet ist; der Kasten (20) mittels eines Paars linearer Führungen oder Wellen (21) und mittels motorgetriebener Mechanismen (22), die mit der Steuerelektronik der elektrischen Schalttafel (16) verbunden sind, vertikal bewegt werden kann und der Kasten (20) in der abgesenkten Position eine aus der Haltestruktur der Antenne oder Antennen (4) und der Fördereinrichtung (1) und der Verpackung gebildete Anordnung abdeckt und elektromagnetisch abschirmt; wobei der Kasten (20) untere Ränder aufweist, an denen Dichtungen (25) angeordnet sind, die dazu eingerichtet sind, dass sie eine RFID-Abschirmung zwischen dem Kasten (20) und der unteren Ablage (23) sicherstellen, so dass ein Faradayscher Käfig zwischen dem Kasten (20), der unteren Ablage (23) und den Dichtungen (25) erzeugt ist.

2. Hochgeschwindigkeitstunnel zum Lesen und Massencodieren von RFID-Etiketten, die in einer Verpackung enthalten sind, nach Anspruch 1, wobei der Kasten (20) aus perforiertem Aluminium hergestellt ist.

3. Hochgeschwindigkeitstunnel zum Lesen und Massencodieren von RFID-Etiketten, die in einer Verpackung enthalten sind, nach Anspruch 1, wobei die Fördereinrichtung (1) Wägezellen (24) umfasst.

4. Hochgeschwindigkeitstunnel für das Lesen und Massencodieren von RFID-Etiketten, die in einer Verpackung enthalten sind, nach Anspruch 1, wobei am Einlass und am Auslass des Tunnels Sichtblenden (19') angebracht sind, die direkt mit dem Tunnel verankert sind und die Form von umgekehrten U-förmigen Platten haben.

5. Hochgeschwindigkeitstunnel für das Lesen und Massencodieren von RFID-Etiketten, die in einer Verpackung enthalten sind, nach Anspruch 1, wobei die elektrische Schalttafel (16) ein unabhängiges Element in Bezug auf den Tunnel selbst darstellt, das mit diesem über die entsprechende Verkabelung verbunden ist.

6. Hochgeschwindigkeitstunnel zum Lesen und Massencodieren von RFID-Etiketten, die in einer Verpackung enthalten sind, nach Anspruch 1, wobei das Gehäuse (18) einen seitlichen Zugang zur Wartung aufweist, der durch ein Paar aufklappbarer Flügel (11 ') ausgebildet ist.

7. Hochgeschwindigkeitstunnel zum Lesen und Massencodieren von RFID-Etiketten, die in einer Verpackung enthalten sind, nach Anspruch 1, wobei der Kasten (20) Seitenwände und einen oberen Boden umfasst und aus Aluminiumplatten mit einer Dicke von 2 mm ausgebildet ist.

8. Hochgeschwindigkeitstunnel zum Lesen und Massencodieren von RFID-Etiketten, die in einer Verpackung enthalten sind, nach einem der vorhergehenden Ansprüche, wobei der Kasten (20) Seitenwände und einen oberen Boden aufweist und die Perforationen der Seitenwände und/oder des oberen Bodens einen Durchmesser von 5 mm haben.

9. Hochgeschwindigkeitstunnel zum Lesen und Massencodieren von RFID-Etiketten, die in einer Verpackung enthalten sind, nach einem der vorhergehenden Ansprüche, wobei der Kasten (20) Seitenwände und einen oberen Boden aufweist und die Zentren der Perforationen der Seitenwände und/oder des oberen Bodens einen Abstand von 12 mm zueinander haben.

10. Hochgeschwindigkeitstunnel zum Lesen und Massencodieren von RFID-Etiketten, die in einer Verpackung enthalten sind, nach einem der vorhergehenden Ansprüche, wobei die untere Ablage (23) einen Durchführungsverbinder (26) umfasst, durch den Kabel (28) durch die untere Ablage (23) geführt sind, um im Inneren des Faradayschen Käfigs angeordnet zu sein, wenn sich der Kasten (20) in einer unteren Position in Kontakt mit der unteren Ablage (23) befindet.

11. Hochgeschwindigkeitstunnel zum Lesen und Massencodieren von RFID-Etiketten, die in einer Verpackung enthalten sind, nach Anspruch 10, wobei die Kabel (28) von einem Abschirmnetz (27) umgeben sind.

12. Hochgeschwindigkeitstunnel zum Lesen und Massencodieren von RFID-Etiketten, die in einer Verpackung enthalten sind, nach einem der vorhergehenden Ansprüche, wobei die Dichtungen (25) aus einem Material mit elastischen Eigenschaften hergestellt sind und eine Metallbeschichtung aufweisen.

13. Hochgeschwindigkeitstunnel zum Lesen und Massencodieren von RFID-Etiketten, die in einer Verpackung enthalten sind, nach einem der vorhergehenden Ansprüche, wobei die Dichtungen (25) lineare Elemente mit einer Dicke von 1 cm sind.

## Revendications

1. Tunnel à grande vitesse permettant la lecture et l'encodage en masse d'étiquettes RFID contenues dans un paquet ; le tunnel comprenant un boîtier (18) avec des ouvertures d'entrée et de sortie opposées respectives, à l'intérieur duquel sont établis un moyen d'acheminement (1) le long duquel le paquet est déplacé, ainsi qu'une ou plusieurs antennes à haute puissance (4) pour la mesure d'étiquettes RFID, agencées dans une structure de maintien, et une cellule photoélectrique (5) pour la détection de l'entrée de paquets dans le tunnel, ces éléments étant commandés au moyen d'une unité de commande associée à un tableau électrique (16) faisant partie du tunnel, **caractérisé en ce que** le tunnel à grande vitesse comprend en outre une porte d'entrée guillotine et une porte de sortie guillotine complétées par des parois latérales intégrant une boîte (20), et un plateau inférieur (23) agencé sous le moyen d'acheminement (1) du tunnel ; dans laquelle la boîte (20) peut être déplacée verticalement au moyen d'une paire d'arbres ou de guides linéaires (21) et au moyen de mécanismes motorisés (22) associés à l'électronique de commande du tableau électrique (16) ; la boîte (20), en position abaissée, couvre et protège électromagnétiquement un ensemble formé par la structure de maintien de l'antenne ou des antennes (4) et le moyen d'acheminement (1) et le paquet ; dans laquelle la boîte (20) comprend des bords inférieurs sur lesquels sont agencés des joints étanches (25) configurés de manière à assurer un blindage RFID entre la boîte (20) et le plateau inférieur (23) de sorte qu'une cage de Faraday est créée entre la boîte (20), le plateau inférieur (23) et les joints étanches (25).

2. Tunnel à grande vitesse permettant la lecture et l'encodage en masse d'étiquettes RFID contenues dans un paquet selon la revendication 1, dans lequel la boîte (20) est constituée d'aluminium perforé.

3. Tunnel à grande vitesse permettant la lecture et l'encodage en masse d'étiquettes RFID contenues dans un paquet selon la revendication 1, dans lequel le moyen d'acheminement (1) inclut des cellules de pesage (24).

4. Tunnel à grande vitesse permettant la lecture et l'encodage en masse d'étiquettes RFID contenues dans un paquet selon la revendication 1, dans lequel, à l'entrée et à la sortie du tunnel, sont établies des visières (19') directement ancrées au tunnel, prenant la forme de plaques en forme de U inversé.

5. Tunnel à grande vitesse permettant la lecture et l'encodage en masse d'étiquettes RFID contenues dans un paquet selon la revendication 1, dans lequel le tableau électrique (16) constitue un élément indépendant par rapport au tunnel lui-même, relié à celui-ci par le câblage correspondant.

6. Tunnel à grande vitesse permettant la lecture et l'encodage en masse d'étiquettes RFID contenues dans un paquet selon la revendication 1, dans lequel le boîtier (18) inclut un accès latéral pour la maintenance, formé par une paire de battants articulés (11').

7. Tunnel à grande vitesse permettant la lecture et l'encodage en masse d'étiquettes RFID contenues dans un paquet selon la revendication 1, dans lequel la boîte (20) comprend des parois latérales et une base supérieure et est formée par des plaques d'aluminium de 2 mm d'épaisseur.

8. Tunnel à grande vitesse permettant la lecture et l'encodage en masse d'étiquettes RFID contenues dans un paquet selon l'une quelconque des revendications précédentes, dans lequel la boîte (20) comprend des parois latérales et une base supérieure et les perforations des parois latérales et/ou de la base supérieure ont un diamètre de 5 mm.

9. Tunnel à grande vitesse permettant la lecture et l'encodage en masse d'étiquettes RFID contenues dans un paquet selon l'une quelconque des revendications précédentes, dans lequel la boîte (20) comprend des parois latérales et une base supérieure et les centres des perforations des parois latérales et/ou de la base supérieure sont séparés les uns des autres de 12 mm.

10. Tunnel à grande vitesse permettant la lecture et l'encodage en masse d'étiquettes RFID contenues dans un paquet selon l'une quelconque des revendications précédentes, dans lequel le plateau inférieur (23) comprend un raccord de traversée (26) à travers lequel des câbles (28) traversent ledit plateau inférieur (23) pour être agencés à l'intérieur de la cage de Faraday lorsque la boîte (20) est en position abaissée et en contact avec ledit plateau inférieur (23).

11. Tunnel à grande vitesse permettant la lecture et l'encodage en masse d'étiquettes RFID contenues dans un paquet selon la revendication 10, dans lequel les câbles (28) sont entourés d'un maillage de blindage (27).

12. Tunnel à grande vitesse permettant la lecture et l'encodage en masse d'étiquettes RFID contenues dans un paquet selon l'une quelconque des revendications précédentes, dans lequel les joints étanches (25) sont constitués d'un matériau ayant des propriétés élastiques et comprennent un revêtement métallique.

13. Tunnel à grande vitesse permettant la lecture et l'encodage en masse d'étiquettes RFID contenues dans un paquet selon l'une quelconque des revendications précédentes, dans lequel les joints étanches (25) sont des éléments linéaires de 1 cm d'épaisseur.
